# EUROPÄISCHE PATENTSCHRIFT

(11) **EP 3 446 953 B1**
(45) Veröffentlichungstag und Bekanntmachung des Hinweises auf die Patenterteilung: **23.02.2022**
(21) Anmeldenummer: 18187340.7
(22) Anmeldetag: 03.08.2018
(51) Int. Cl.: B62D 65/18, B05B 13/02, B61B 13/04, F26B 15/16

(54) **FÖRDERVORRICHTUNG ZUR FÖRDERUNG VON WERKSTÜCKEN IN EINER OBERFLÄCHENBEHANDLUNGSANLAGE**
CONVEYOR DEVICE FOR CONVEYING WORKPIECES IN A SURFACE TREATMENT INSTALLATION
DISPOSITIF DE TRANSPORT PERMETTANT DE TRANSPORTER DES PIÈCES À USINER DANS UNE INSTALLATION DE TRAITEMENT DE SURFACE

(30) Priorität: 15.08.2017 DE 102017118561
(43) Veröffentlichungstag der Anmeldung: 27.02.2019
(73) Patentinhaber: pentanova cs GmbH, 71032 Böblingen (DE)
(72) Erfinder: Riegraf, Martin, 72766 Reutlingen (DE)
(74) Vertreter: Ostertag & Partner Patentanwälte mbB

(56) Entgegenhaltungen:
- DE-A1-102010 045 010
- DE-A1-102015 003 736
- JP-A- H03 277 453
- JP-A- 2001 097 534
- JP-B2- 2 856 033
- JP-U- H0 388 978
- US-A- 3 518 946
- US-A1- 2009 205 532
- US-A1- 2011 017 132

## Beschreibung

### HINTERGRUND DER ERFINDUNG

### 1. Gebiet der Erfindung

Die Erfindung betrifft eine Fördervorrichtung zur Förderung von Werkstücken, insbesondere zur Förderung von Fahrzeugkarosserien oder Teilen davon.

Die Erfindung betrifft ferner eine Oberflächenbehandlungsanlage mit einer solchen Fördervorrichtung sowie ein Verfahren zur Oberflächenbehandlung von Werkstücken.

### 2. Beschreibung des Standes der Technik

Derartige Fördervorrichtungen dienen in Fertigungsanlagen, insbesondere in Oberflächenbehandlungsanlagen der Automobilindustrie dazu, Werkstücke, insbesondere Fahrzeugkarosserien, zwischen und teilweise auch in einzelnen Bearbeitungs- oder Behandlungsstationen zu fördern.

So sind beispielsweise aus der DE 10 2015 003 736 A1 oder der DE 10 2016 004 484 A1

Fördervorrichtungen eingangs genannter Art bekannt.

Ein Merkmal einer solchen vorbekannten Einschienen-Bodenbahn ist, dass der Werkstückträger, insbesondere ein Skid zur Aufnahme von Fahrzeugkarosserien, von einem Angriffspunkt der Hauptführungseinrichtung beabstandet ist. Dazu ist eine Verbindungseinrichtung vorgesehen, welche den Werkstückträger mit den Antriebs- und Fahrelementen insbesondere mit der Hauptführungseinrichtung verbindet. Auf diese Weise kann der Werkstückträger durch einen Behandlungsraum der Fertigungsanlage gefördert werden, der durch einen Boden zumindest im Wesentlichen von einem Fahrraum unterhalb des Behandlungsraumes abgetrennt ist. Dadurch können die beweglichen Teile des Förderwagens und die Fahrschiene in dem Fahrraum angeordnet sein, sodass der Behandlungsraum frei von Verschmutzungen bleibt, die auf die Bewegung der Fördervorrichtung zurückzuführen wären.

Häufig werden derartige Einschienen-Bodenbahnen bei Oberflächenbehandlungsanlagen, insbesondere mit Lackierstationen, verwendet, damit die Oberflächen der Werkstücke nicht durch die Fördervorrichtung verschmutzt werden. Umgekehrt wird dadurch selbstverständlich auch die Verschmutzung der Antriebs- und Fahrelemente des Förderwagens beispielsweise durch aufzutragenden Lack vermieden.

Nachteilig an einer solchen Fördervorrichtung ist jedoch, dass durch die Beabstandung des Werkstückträgers und damit gegebenenfalls auch des Schwerpunktes von der Hauptführungseinrichtung teilweise eine nur unzureichende Stabilität gegeben ist. Dadurch kann es vorkommen, dass beispielsweise die Lage des Werkstückes für bestimmte Behandlungen nicht genau genug definiert ist.

Aus JP 2 856033 B2 ist daher eine Fördervorrichtung bekannt, bei der nur streckenweise zusätzliche Stützschienen vorgesehen sind, die mit Stützrollen zusammenarbeiten. Weitere Fördervorrichtungen sind aus JP H03 889 78 U, US 2011/017 132 A1, JP 2001 097 534 A sowie US 3,518,946 A. JP 2001 097 534 A offenbart die Merkmale des Oberbegriffs des Anspruchs 1.

### ZUSAMMENFASSUNG DER ERFINDUNG

Es ist daher Aufgabe der Erfindung, eine Fördervorrichtung der eingangs genannten Art zu schaffen, die bezüglich ihrer Führung, insbesondere hinsichtlich einer Aufnahme eines Kippmoments des Werkstückträgers bei gleichzeitigem Vermeiden einer Überbestimmtheit der Führung, verbessert ist.

Erfindungsgemäß wird dies durch eine Fördervorrichtung nach Anspruch 1 gelöst.

Der Erfinder hat erkannt, dass eine Fördervorrichtung häufig einerseits Abschnitte aufweist, in welchen nur eine "normale" Stabilität hinsichtlich der Kippbewegung des Werkstückträgers erforderlich ist, für deren Einhaltung die Komponenten der Fördervorrichtung, insbesondere die Komponenten der Hauptführungseinrichtung, ausgelegt sind. Darüber hinaus besteht in einer solchen Fördervorrichtung jedoch auch Bedarf nach Stabilisierungsabschnitten mit demgegenüber erhöhten Stabilitätsanforderungen, in welchen die durch die Hauptführungseinrichtung gewährleistete Stabilität nicht ausreichend ist. Insbesondere kann es vorkommen, dass die Hauptführungseinrichtung aufgrund von Verschleiß, Fertigungstoleranzen und/oder elastischen Verformungen gegebenenfalls auftretende Kippbewegungen nicht verhindern kann. Abschnitte mit "normalen" Stabilitätsanforderungen können beispielsweise Reinigungs- und/oder Trocknerstationen in Oberflächenbehandlungsanlagen sein. Abschnitte mit erhöhten Stabilitätsanforderung können hingegen beispielsweise Lackierstationen, Messstationen und/oder Bedruckungsstationen, die mit Hilfe von Druckköpfen eine Bedruckung der Werkstücke mit Mustern ermöglichen, umfassen.

Erfindungsgemäß hat der Erfinder dazu eine Zusatzführungseinrichtung vorgesehen, die in den Stabilisierungsabschnitten wirkt. Dazu ist dort zusätzlich zur Fahrschiene der Hauptführungseinrichtung ein stationäres Zusatzführungsmittel angeordnet, welches zusammen mit dem von dem Förderwagen mitgeführten Zusatzführungsmittel die Bewegungsfreiheit des Werkstückträgers stärker einschränkt. Dadurch wird insbesondere die Kippbewegung des Werkstückträgers um eine in Förderrichtung weisende Rotationsachse eingeschränkt bzw. verhindert. Unter einer in Förderrichtung weisenden Rotationsachse ist hier selbstverständlich eine durch den Verlauf der Förderstrecke, des stationären Zusatzführungsmittels und der Abmessungen des Förderwagens selbst gegebene Achse gemeint, die in etwa mit der Förderrichtung zusammen fällt.

Die Zusatzführungseinrichtung verhindert somit während des Transports auftretende Kippbewegungen oder entsprechende Schwingungen des Werkstückträgers und dadurch Lageabweichungen des Werkstückes, so dass im Stabilisierungsabschnitt höhere Stabilitätsanforderungen gewährleistbar sind.

Als Fahrschiene kann eine Bodenfahrschiene zum Einsatz kommen, wobei unter einer solchen eine Fahrschiene verstanden wird, bei welcher der Werkstückträger im Wesentlichen oberhalb der Fahrschiene angeordnet ist. D.h. auch Fördervorrichtungen, bei welchen die Bodenfahrschiene mit entsprechenden Tragstrukturen deutlich oberhalb eines Hallenbodens angeordnet ist, sollen vom Schutzumfang erfasst sein.

Erfindungsgemäß ist ferner vorgesehen, dass zwischen der Hauptführungseinrichtung und der Zusatzführungseinrichtung eine Entkoppelungseinrichtung, insbesondere hinsichtlich der Kippbewegung des Werkstückträgers um die in Förderrichtung weisende Rotationsachse, angeordnet ist.

Eine Entkoppelungseinrichtung erlaubt eine Überbestimmung zu vermeiden. Daher kann die Entkoppelungseinrichtung insbesondere im Zusammenhang mit einer Auflageführung verwendet werden.

Erfindungsgemäß ist dabei vorgesehen, dass die Verbindungseinrichtung einen Zwischenträger aufweist, der den Werkstückträger derart trägt, dass der Werkstückträger gegenüber dem Zwischenträger in vertikaler Richtung eine begrenzte Bewegungsfreiheit hat.

Die Entkoppelung in vertikaler Richtung ermöglicht insbesondere bei der Verwendung einer horizontalen Führung des Werkstückträgers eine verspannungsfreie Lagefixierung des Werkstücks auch wenn die Führungswirkung der Hauptführungseinrichtung nicht aufgehoben wird. Die vertikale Bewegungsfreiheit kann durch zwei Stifte realisiert werden, die in zwei sich in vertikaler Richtung erstreckenden Langlöcher eingreifen und in diesen auf- und abbewegbar sind, wobei die Langlöcher am Zwischenträger und die Stifte am Werkstückträger oder umgekehrt angeordnet sein können.

Vorteilhaft kann die Hauptführungseinrichtung derart ausgestaltet sein, dass die Führungswirkung der Hauptführungseinrichtung im Stabilisierungsabschnitt zumindest teilweise aufgehoben ist.

Der Erfinder hat weiter erkannt, dass eine Zusatzführungseinrichtung, die zusätzlich zur Hauptführungseinrichtung ein Kippmoment des Werkstückträgers aufnimmt, zu einer statischen Überbestimmung der Führung führt, in deren Folge kleinere Passungsfehler der Führungseinrichtungen beispielsweise Verspannungen oder Lagerschäden herbeiführen können. Durch das Aufheben der Führungswirkung der Hauptführungseinrichtung im Stabilisierungsabschnitt wird daher im Grunde zumindest ein Angriffspunkt der Hauptführungseinrichtung zur Aufnahme eines Kippmoments durch einen Angriffspunkt einer Zusatzführungseinrichtung ersetzt, welcher näher beim Werkstückträger angeordnet ist als der Angriffspunkt der Hauptführungseinrichtung. Der Werkstückträger mit dem Werkstück lässt sich dadurch mit höherer Genauigkeit positionieren, ohne dass es durch statische Überbestimmung zu Lagerschäden oder dgl. kommt. In einem Übergangsbereich zwischen Normalabschnitten und Stabilisierungsabschnitten kann dabei die Führungswirkung der Hauptführungswirkung zunehmend aufgehoben werden, insbesondere in dem Maße wie eine Führungswirkung der Zusatzführungseinrichtung zunimmt. Entsprechendes gilt reziprok für den umgekehrten Übergang.

Vorteilhaft kann die Hauptführungseinrichtung zwei mitgeführte Hauptführungsmittel, insbesondere mindestens zwei Führungsrollen, umfassen, die in einem Normalabschnitt der Förderstrecke jeweils mit einer Anlagefläche der Fahrschiene zusammenarbeiten, um hinsichtlich der Kippbewegung des Werkstückträgers um die in Förderrichtung weisende Rotationsachse eine Führung zu bewirken, und dass zur Aufhebung der Führungswirkung in dem Stabilisierungsabschnitt eine der beiden Anlageflächen derart entfernt ist, dass sie nicht mehr an dem mitgeführten Hauptführungsmittel anliegt.

Grundsätzlich ist es denkbar, die Führungswirkung der Hauptführungseinrichtung im Stabilisierungsabschnitt aufzuheben, indem beispielsweise über einen automatisch betätigbaren Entriegelungsmechanismus eines der mitgeführten Hauptführungsmittel aus seinem Eingriff an der jeweiligen stationären Anlagefläche gebracht wird. Einfacher und kostengünstiger ist es jedoch, wenn im Stabilisierungsabschnitt die Fahrschiene gegenüber einem Normalabschnitt abgewandelt ist. So können die mitgeführten Hauptführungsmittel seitliche Führungsrollen sein, die an einer Doppel-T-förmigen Fahrschiene an den oberen bzw. unteren Flanschseitenflächen anliegen. Im Stabilisierungsbereich kann dann der obere oder untere Flansch verjüngt oder entfernt sein, sodass die entsprechende Flanschseitenfläche nicht mehr mit der jeweiligen Führungsrolle zusammenarbeiten kann.

Vorteilhaft ist vorgesehen, dass die Zusatzführungseinrichtung dazu eingerichtet ist, seitlich, insbesondere an der Verbindungseinrichtung, am Förderwagen anzugreifen, um eine seitliche Führung zu bewirken, indem eine horizontale Kraftkomponente eines Kippmoments, insbesondere der Verbindungseinrichtung, aufgenommen wird.

Dazu kann an der Verbindungseinrichtung eine Angriffsfläche für das stationäre Zusatzführungsmittel angeordnet sein. Die seitliche Führung kann auch beidseitig vorgesehen sein, wodurch die Kippbewegung des Werkstückträgers in beide Richtungen verhindert wird.

Vorteilhaft ist vorgesehen, dass das mitgeführte Zusatzführungsmittel ein an der Verbindungseinrichtung angeordnetes Abroll- oder Gleitelement, insbesondere eine Führungsrolle oder eine Gleitkufe, aufweist und dass das stationäre Zusatzführungsmittel eine längliche Seitenführungsschiene aufweist, an welcher das Abroll- oder Gleitelement im Stabilisierungsabschnitt anliegt.

Selbstverständlich ist auch eine Variante denkbar, bei der das mitgeführte Zusatzführungsmittel ein längliche Schiene aufweist und das stationäre Zusatzführungsmittel eine Vielzahl von Abroll- oder Gleitelement aufweist, entlang welcher die längliche Schiene entlang läuft. Besonders vorteilhaft ist jedoch die beanspruchte oben genannte Variante, da dabei das stationäre Zusatzführungsmittel einfacher realisiert werden kann. Zudem sind bewegliche Element wie Rollen am Förderwagen hinsichtlich der Wartung einfacher, da die Förderwagen ohnehin in Intervallen außerhalb der Förderstrecke gewartet werden, ohne den Gesamtbetrieb zu beeinflussen. Im Falle einer beidseitigen Führung sind vorteilhaft zwei Seitenführungsschienen vorgesehen, die mit entsprechenden Abroll- oder Gleitelementen zusammenarbeiten. Bei Abrollelementen sollten diese, beispielsweise durch eine exzentrische Anordnung quer zur Förderrichtung, so angeordnet sein, dass sie jeweils nur mit einer Schiene zusammenarbeiten.

Vorteilhaft ist vorgesehen, dass die Zusatzführungseinrichtung dazu eingerichtet ist, horizontal, insbesondere an dem Werkstückträger, am Förderwagen anzugreifen, um eine horizontale Führung zu bewirken, indem eine vertikale Kraftkomponente eines Kippmoments, insbesondere des Werkstückträgers, aufgenommen wird.

Dadurch wird die Kippbewegung des Werkstückträgers dadurch verhindert, dass dessen horizontale Lage fixiert wird.

Vorteilhaft ist vorgesehen, dass das mitgeführte Zusatzführungsmittel ein an dem Werkstückträger angeordnetes Abroll- oder Gleitelement, insbesondere eine Führungsrolle oder eine Gleitkufe, aufweist und dass das stationäre Zusatzführungsmittel eine längliche Auflageschiene, insbesondere zwei Auflageschienen, aufweist, auf welcher das Abroll- oder Gleitelement im Stabilisierungsabschnitt aufliegt.

Dadurch kann in einfacher Weise eine Auflageführung realisiert werden. Insbesondere können dabei zwei entlang der Förderstrecke parallel nebeneinander angeordnete Auflageschienen vorgesehen sein, um den Werkstückträger gegen Kippbewegungen zu sicheren, insbesondere um ihn gerade zu halten.

Vorteilhaft kann vorgesehen sein, dass der Antrieb in dem Stabilisierungsabschnitt der Förderstrecke, in welchem die stationäre Zusatzführung angeordnet ist, formschlüssig arbeitet.

Dies führt auch in Transportrichtung zu einer genaueren Führung, sodass auch bezüglich der Transportrichtung eine bessere Positionierung des Werkstückes erreicht wird. Darüber hinaus kann es insbesondere bei Verwendung einer Entkoppelungseinrichtung zwischen dem Werkstückträger und der Hauptführungseinrichtung vorkommen, dass auf ein kraftschlüssig arbeitendes Antriebsrad keine ausreichende Anpresskraft wirkt. Ein formschlüssig arbeitender Antrieb kann z.B. eine Zahnrad- und Zahnstangenkombination, eine Kettenradkombination oder dgl. umfassen.

Nach einem weiteren Aspekt der Erfindung ist eine Oberflächenbehandlungsanlage nach Anspruch 9 mit einer erfindungsgemäßen Fördervorrichtung vorgesehen. Die Oberflächenbehandlungsanlage hat dabei einen Behandlungsraum, in dem der Stabilisierungsabschnitt angeordnet ist, und einen Fahrraum, der durch einen Tunnelboden abgegrenzt unterhalb des Behandlungsraumes angeordnet ist, wobei der Tunnelboden einen Verbindungsdurchgang zwischen dem Behandlungsraum und dem Fahrraum aufweist. Ferner ist der Werkstückträger oberhalb des Tunnelbodens und die Hauptführungseinrichtung unterhalb des Tunnelbodens angeordnet und die Verbindungseinrichtung erstreckt sich durch den Verbindungsdurchgang des Tunnelbodens, um den Werkstückträger mit der Hauptführungseinrichtung des Förderwagens zu verbinden.

Eine solche Oberflächenbehandlungsanlage gewährleistet durch die Anordnung der meisten Teile der Fördervorrichtung unterhalb eines Tunnelbodens eine möglichst geringe Verschmutzung dieser Teile und gewährleistet zudem in Stabilisierungsabschnitten eine ausreichende Sicherung gegen Kippbewegungen. Auch wird dadurch eine Verschmutzung der Werkstücke beispielsweise durch von der Fördervorrichtung aufgewirbelten Schmutz reduziert.

Vorteilhaft ist dabei vorgesehen, dass eine Seitenführungsschiene als stationäres Zusatzführungsmittel unterhalb des Tunnelbodens angeordnet ist.

Dies ermöglicht eine zusätzliche Stabilisierung des Werkstückes, ohne dass im Behandlungsraum Komponenten vorgesehen werden müssten, die dort gegebenenfalls die Verschmutzung erhöhen könnten.

Vorteilhaft ist dabei vorgesehen, dass eine Auflageschiene als stationäres Zusatzführungsmittel oberhalb des Tunnelbodens angeordnet ist.

Ein oberhalb des Tunnelbodens angeordnetes stationäres Zusatzführungsmittel ist nahe beim eigentlichen Werkstück, sodass eine bessere Stabilisierung gegen ein Kippmoment erzielt wird.

Nach einem weiteren Aspekt der Erfindung ist ein Verfahren nach Anspruch 12 zur Oberflächenbehandlung
von Werkstücken, insbesondere von Fahrzeugkarosserien oder Teilen davon, mit folgenden Schritten vorgesehen:
a) Fördern der Werkstücke in einer Oberflächenbehandlungsanlage mit einer Fördervorrichtung nach einem der vorhergehenden Ansprüche, die entlang der Förderstrecke einen Stabilisierungsabschnitt umfasst;
b) Behandeln der Werkstücke in dem Stabilisierungsabschnitt.

Durch die erhöhte Stabilität lassen sich beispielsweise bei der Lackierung, Messung und/oder Bedruckung von Fahrzeugkarosserien bessere Ergebnisse erzielen.

### KURZE BESCHREIBUNG DER ZEICHNUNGEN

Nachfolgend werden Ausführungsbeispiele der Erfindung anhand der Zeichnungen näher erläutert, wobei die Figuren 4 bis 9 die erfindungsgemäß beanspruchte Entkoppelungseinrichtung aufweisen. In diesen zeigen:
- Figur 1: eine stark schematisierte Aufsicht auf eine Oberflächenbehandlungsanlage mit einer erfindungsgemäßen Fördervorrichtung, die durch einen Stabilisierungsabschnitt mit erhöhter Stabilitätsanforderung führt;
- Figur 2: einen Querschnitt der Fördervorrichtung in einem Normalabschnitt mit üblichen Stabilitätsanforderungen;
- Figur 3: einen Querschnitt der Fördervorrichtung in einem Stabilisierungsabschnitt, wobei eine Zusatzführungseinrichtung nach einem ersten Ausführungsbeispiel gezeigt ist;
- Figur 4: einen Querschnitt der Fördervorrichtung in einem Normalabschnitt nach einem zweiten Ausführungsbeispiel;
- Figur 5: eine Seitenansicht der Fördervorrichtung aus Figur 4;
- Figur 6: einen Querschnitt der Fördervorrichtung in einem Stabilisierungsabschnitt für das Ausführungsbeispiel nach den Figuren 4 und 5;
- Figur 7: eine Seitenansicht der Fördervorrichtung aus Figur 6;
- Figur 8: einen Querschnitt der Fördervorrichtung in einem Stabilisierungsabschnitt nach dem Ausführungsbeispiel der Figuren 4 bis 7, wobei ein abgewandelter Antrieb gezeigt ist;
- Figur 9: einen Querschnitt der Fördervorrichtung in einem Stabilisierungsabschnitt nach einem weiteren Ausführungsbeispiel;
- Figur 10: einen Querschnitt der Fördervorrichtung in einem Stabilisierungsabschnitt nach einem weiteren Ausführungsbeispiel.

### BESCHREIBUNG BEVORZUGTER AUSFÜHRUNGSBEISPIELE

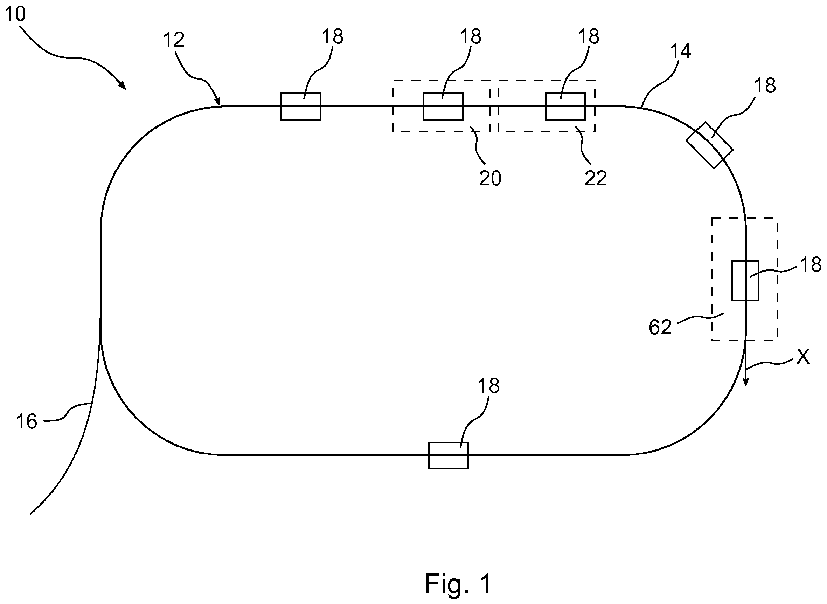

In Figur 1 ist beispielhaft eine insgesamt mit den Bezugszeichen 10 versehene Oberflächenbehandlungsanlage schematisch gezeigt.

Als für die Erfindung hier wesentliche Komponente umfasst die Oberflächenbehandlungsanlage 10 eine Fördervorrichtung 12, welche eine einspurige Fahrschiene 14 aufweist, die sich entlang einer Förderstrecke 16 durch die Oberflächenbehandlungsanlage 10 erstreckt. Entlang der Fahrschiene 14 werden dabei mehrere Förderwagen 18 bewegt.

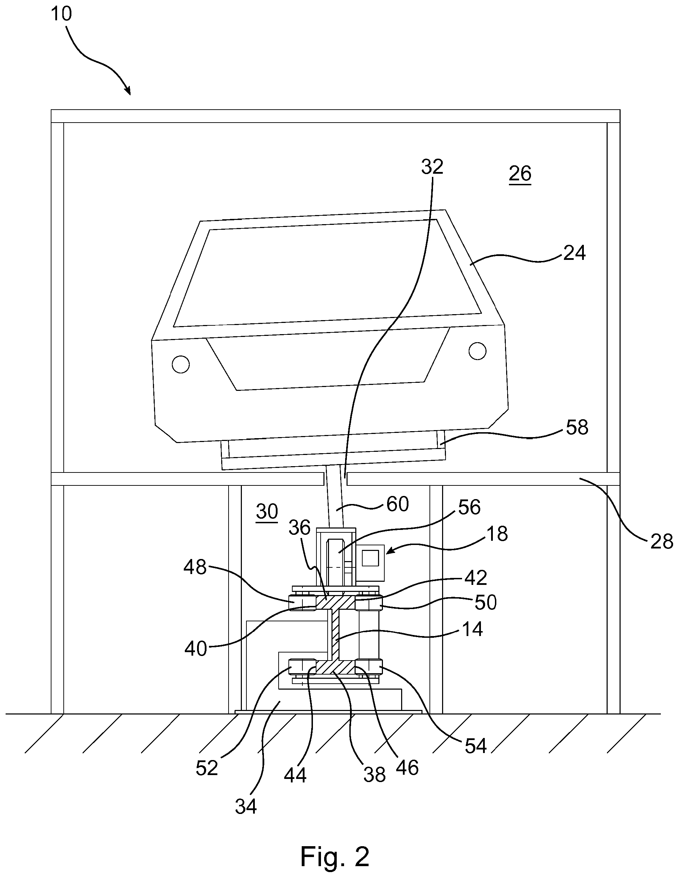

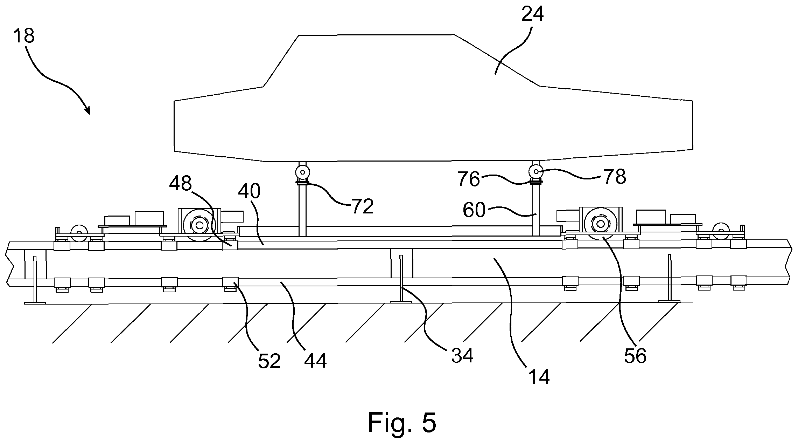

Wie aus Figur 1 ersichtlich ist, umfasst die Oberflächenbehandlungsanlage 10 hier mit einem Reinigungsbereich 20 und einem Trocknungsbereich 22 beispielhaft Normalabschnitte der Fördervorrichtung 12, welche keine besonderen Stabilitätsanforderungen hinsichtlich der exakten Lage von geförderten Werkstücken, hier Fahrzeugkarosserien 24 (vgl. Figuren 2 bis 10), haben.

Wie in Figur 2 zu erkennen ist, umfasst die Oberflächenbehandlungsanlage 10 beispielsweise im Trocknungsraum 22 einen Behandlungsraum 26, der nach unten hin von einem Tunnelboden 28 begrenzt wird.

Unterhalb dieses Tunnelbodens 28 ist in etwa zentral ein Fahrraum 30 angeordnet, wobei der Tunnelboden 28 einen Verbindungsdurchgang 32 zwischen dem Behandlungsraum 26 und dem Fahrraum 30 aufweist.

In dem Fahrraum 30 ist mit Hilfe von Stützträgern 34 die Doppel-T-Träger-förmige Fahrschiene 14 angeordnet, welche einen oberen Flansch 36 und einen unteren Flansch 38 aufweist. Die zugehörigen Flanschseitenflächen 40, 42 des oberen Flansches 36 und die Flanschseitenflächen 44, 46 des unteren Flansches 38 dienen hier als stationäres Hauptführungsmittel einer Hauptführungseinrichtung, mit welcher die Förderwagen 18 in einem Normalabschnitt geführt sind.

Als Gegenkomponente der Hauptführungseinrichtung weist der Förderwagen 18 dazu als mitgeführtes Hauptführungsmittel obere und untere Führungsrollen 48, 50 sowie 52, 54 auf, die jeweils an den oberen Flanschseitenflächen 40, 42 bzw. den unteren Flanschseitenflächen 44, 46 seitlich angreifen und so eine Führungswirkung hinsichtlich eines Kippmoments um eine in etwa in Förderrichtung weisende Rotationsachse X (vgl. Figur 1) haben. Dazu sind die Führungsrollen 48, 50, 52 und 54 an einer Tragstruktur angeordnet, welche die Fahrschiene 14 bügelförmig umgreift.

Der Förderwagen 18 weist ferner als Teil des Antriebs ein Reibrad 56 auf, welches auf dem oberen Flansch 36 der Fahrschiene 14 aufliegt und den Förderwagen 18 kraftschlüssig entlang der Fahrschiene 14 antreibt.

Das so ausgebildete Fahrwerk des Förderwagens 18 ist somit vollständig im Fahrraum 30 angeordnet.

Zur Aufnahme der Fahrzeugkarosserie 24 weist der Förderwagen 18 einen Werkstückträger 58 auf, der hingegen im Behandlungsraum 26 angeordnet ist. Dazu ist die Tragstruktur mit den Führungsrollen 48, 50, 52 und 54 über eine Stange 60 als Verbindungselement mit dem Werkstückträger 58 verbunden, welche sich ihrerseits durch den Verbindungsdurchgang 32 im Tunnelboden 28 hindurch erstreckt.

Für weitere Details zur Ausgestaltung der Fördervorrichtung 12 in den Abschnitten normaler Stabilitätsanforderungen sei auf die DE 10 2015 003 736 A1 und die 10 2016 004 484.5 hingewiesen.

Durch die Beabstandung des mitgeführten Hauptführungsmittels von dem eigentlichen Werkstückträger 58, der mit der Fahrzeugkarosserie 24 die Hauptlast trägt, sind die Hebelverhältnisse bezüglich der Führungswirkung teilweise ungünstig, sodass es in Normalabschnitten der Förderstrecke 16, wie in Figur 2 angedeutet, zu Kippbewegungen der Fahrzeugkarosserie 24 kommen kann.

Wie aus Figur 1 ersichtlich ist, sind umfasst die Förderstrecke 16 bei der gezeigten Oberflächenbehandlungsanlage 10 daher mit einem beispielhaften Lackierbereich 62 einem Stabilisierungsabschnitt, in welchem erhöhte Stabilitätsanforderungen erfüllt werden müssen.

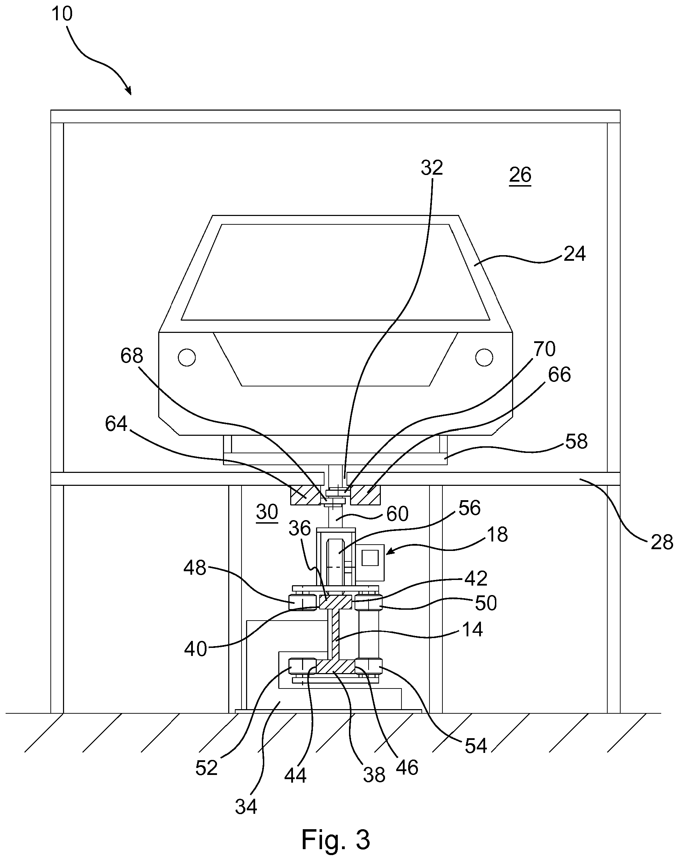

In diesem Stabilisierungsabschnitt sind wie in Figur 3 gezeigt unterhalb des Tunnelbodens 28 nahe des Verbindungsdurchgangs 32 zwei Seitenführungsschienen 64, 66 als stationäres Zusatzführungsmittel angeordnet, die mit Zusatzführungsrollen 68, 70 als mitgeführtes Zusatzführungsmittel zusammenarbeiten.

Die Zusatzführungsrollen 68, 70 sind leicht seitlich exzentrisch versetzt an der Verbindungsstange 60 angeordnet und rollen dadurch jeweils an einer der beiden Seitenführungsschienen 64, 66 ab, wenn der Förderwagen 18 entlang der Fahrschiene 14 bewegt wird.

Die Seitenführungsschienen 64, 66 sowie die Zusatzführungsrollen 68, 70 wirken somit als Zusatzführungseinrichtung, welche aufgrund der stärkeren Nähe zum eigentlichen Werkstückträger 58 bzw. der Fahrzeugkarosserie 24 und dem damit verbundenen günstigeren Hebel im Vergleich zu den oberen Führungsrollen 48 und 50 der Hauptführungseinrichtung eine höhere Stabilisierung gegenüber seitlichen Kippbewegungen bewirkt.

Um Verspannungen beispielsweise aufgrund Fertigungstoleranzen zwischen der Hauptführungseinrichtung und der Zusatzführungseinrichtung zu verhindern, ist wie in Figur 3 gezeigt in dem Stabilisierungsabschnitt, in welchem die Zusatzführungseinrichtung vorgesehen ist, der obere Flansch 36 der Fahrschiene 14 in seiner seitlichen Breite reduziert, sodass die zugehörigen Flanschseitenflächen 40, 42 nicht mehr an den oberen Führungsrollen 48, 50 anliegen. Dadurch ist die Hauptführungseinrichtung innerhalb des Stabilisierungsabschnitts wirkungslos gestellt und der Förderwagen 18 nur an zwei Punkten nämlich an den unteren Führungsrollen 52, 54 der Hauptführungseinrichtung und an den Zusatzführungsrollen 64, 66 der Zusatzführungseinrichtung geführt.

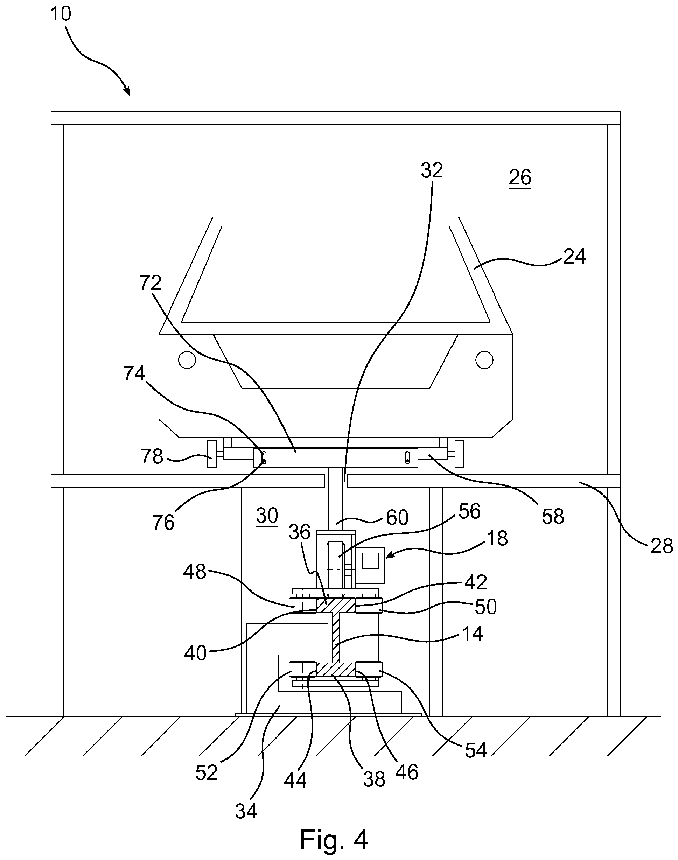

Die Figuren 4 bis 7 zeigen ein Ausführungsbeispiel, bei welchem die Verbindungsstange 60 nicht unmittelbar mit dem Werkstückträger 58 verbunden ist.

Stattdessen ist die Verbindungsstange 60 mit einem Zwischenträger 72 verbunden, welcher zwei vertikal angeordnete Langlöcher 74 aufweist. In diese Langlöcher 74 greifen zwei Stifte 76 ein, die ihrerseits mit dem eigentlichen Werkstückträger 58 verbunden sind. Zusätzlich weist der Werkstückträger 58 seitlich angeordnete Laufrollen 78 auf.

In einem Normalabschnitt schweben die Laufrollen 78 des Werkstückträgers 58 frei in der Luft, sodass das Gewicht des Werkstückträgers 58 und der Fahrzeugkarosserie 24 mit den Stiften 76 am unteren Ende der Langlöcher 74 angeordnet vom Zwischenträger 72 aufgenommen und auf das Fahrwerk übertragen wird.

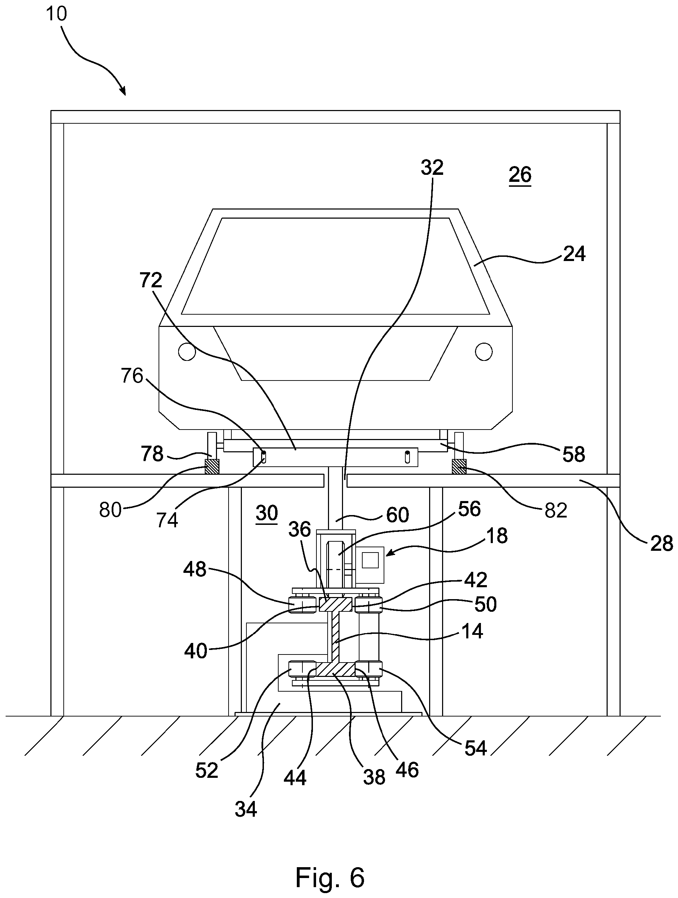

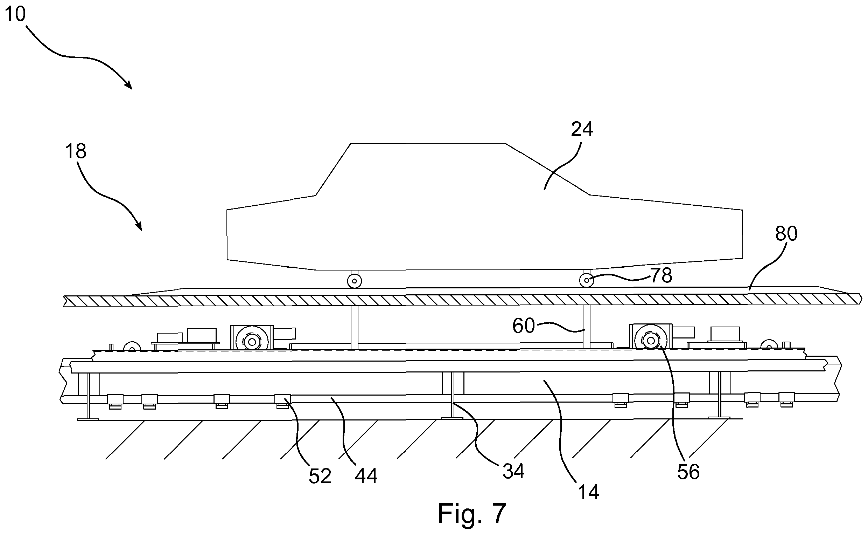

Wie aus den Figuren 6 und 7 ersichtlich ist, sind bei diesem Ausführungsbeispiel in einem Stabilisierungsabschnitt oberhalb des Tunnelbodens 28 zwei Auflaufschienen 80, 82 angeordnet, auf welchen die Laufrollen 78 des Werkstückträgers 58 auflaufen, wodurch der Werkstückträger 58 gegenüber dem Zwischenträger 72 angehoben wird. Dazu können die Stifte 76 in den Langlöchern 74 des Zwischenträgers 72 nach oben ausweichen.

Wie aus Figur 7 ersichtlich ist, sind dabei am Anfang und am Ende der Auflaufschienen 80, 82 Ein- bzw. Auslaufschrägen vorgesehen, um einen sanften Übergang zu ermöglichen.

In diesem Ausführungsbeispiel wird eine erhöhte Stabilität dadurch erreicht, dass die Auflaufschienen 80, 82 zusammen mit den Laufrollen 78 die Kippebene, hier die horizontale Ebene, für den Werkstückträger 58 genau festlegen, sodass die Fahrzeugkarosserie 24 insgesamt stabiler geführt ist als in den Normalabschnitten.

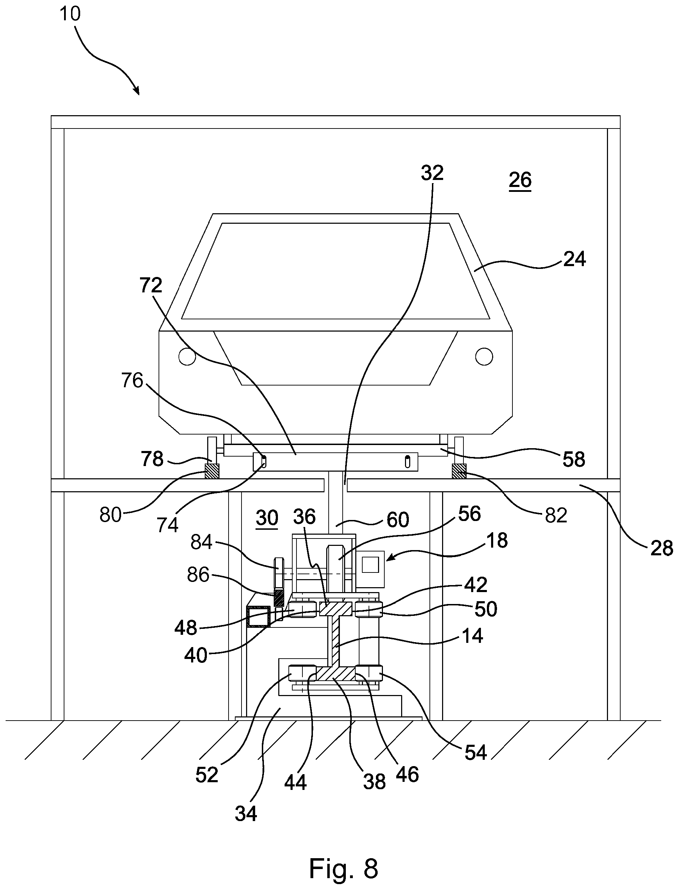

Da der Antrieb normalerweise über ein Reibrad 56, das auf der Fahrschiene 14 entlangläuft, kraftschlüssig wirkt, ist es notwendig, dass eine entsprechende Gewichtskraft das Reibrad 56 nach unten drückt. Bei dem Ausführungsbeispiel der Figuren 4 bis 7 wird im Stabilisierungsabschnitt das Gewicht der Werkzeugkarosserie 24 jedoch von den Auflaufschienen 80, 82 getragen, sodass für das Reibrad 56 keine ausreichende Andrückkraft mehr vorhanden ist. Daher zeigt Figur 8 einen alternativen Antrieb, bei welchem seitlich des Reibrads 56 noch ein Zahnrad 84 auf der gleichen Antriebswelle angeordnet ist, welches mit einer parallel zur Fahrschiene 14 geführten Zahnstange 86 zusammenarbeitet, um einen formschlüssigen Antrieb im Stabilisierungsabschnitt vorzusehen.

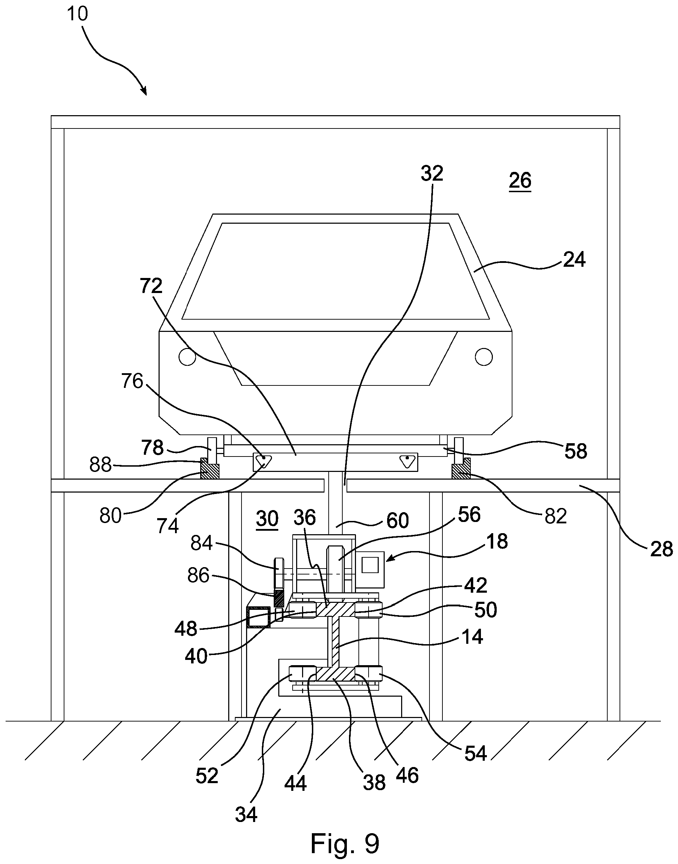

In dem Ausführungsbeispiel nach den Figuren 4 bis 8 sind im Stabilisierungsabschnitt wiederum die oberen Führungsrollen 48, 50 der Hauptführungseinrichtung wirkungslos gestellt, indem der obere Flansch 36 verjüngt ist. Als Alternative oder zusätzlich ist in Figur 9 ein Ausführungsbeispiel gezeigt, bei welchem die Auflaufschienen 80, 82 noch einen seitlichen Führungskranz 88 aufweisen, welcher eine seitliche Bewegung der Laufräder 78 verhindert. Selbstverständlich kann dies auch über entsprechende Laufkränze an den Laufrädern ähnlich wie bei Eisenbahnrädern bewirkt werden.

Die Langlöcher 74 in dem Zwischenträger 72 sind dabei in ihrem oberen Bereich erweitert bzw. als im Wesentlichen dreieckige Aussparungen ausgeführt, welche in ihrem oberen Bereich für die Stifte 76 eine seitliche Bewegung ermöglichen und nur in Ihrem unteren Bereich hinsichtlich der seitlichen Stiftbewegung eine Zentrierungsfunktion haben.

Dadurch ist es nicht mehr notwendig, die Fahrschiene 14 zu verjüngen, da im angehobenen Zustand des Werkstückträgers 58 ein seitliches Spiel nun zwischen dem Zwischenträger 72 und dem Werkstückträger 58 vorhanden ist.

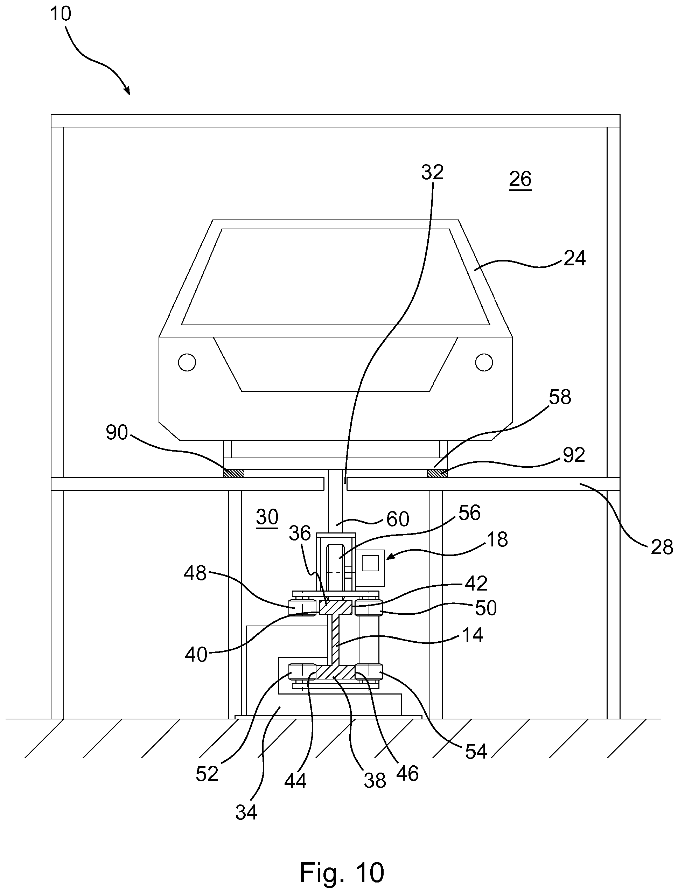

Schließlich ist in Figur 10 eine weitere Alternative gezeigt, in welcher anstatt der Auflaufschienen 80, 82, die mit entsprechenden Laufrollen 78 am Werkzeugträger 58 zusammenarbeiten auf dem Tunnelboden 28 Gleitkufen 90, 92 angeordnet sind, auf welchen der Werkstückträger 58 entlanggleitet. Diese Abwandlung erfordert die geringste Abwandlung gegenüber der vorbekannten Fördervorrichtung 12.

In Ergänzung der vorstehenden Beschreibung ist anzumerken, dass sämtliche Führungseinrichtungen, insbesondere die Zusatzführungseinrichtung, derart ausgestaltet sein können, dass die Führung kurvengängig ist.

In weiterer Abwandlung kann der Werkstückträger 58 einen von dem Förderwagen 18 lösbaren Skid umfassen, der seinerseits die Fahrzeugkarosserie 24 trägt und auf andere Fördersysteme umgesetzt werden kann.

## Patentansprüche

1. Fördervorrichtung (12) zur Förderung von Werkstücken (24), insbesondere zur Förderung von Fahrzeugkarosserien oder Teilen davon, mit
a) einer einspurigen Fahrschiene (14), die sich entlang einer Förderstrecke (16) erstreckt,
b) mindestens einem Förderwagen (18),
- der mit einem Antrieb (56; 84, 86) längs der einspurigen Fahrschiene (14) entlang einer Förderrichtung verfahrbar ist, und
- der einen Werkstückträger (58) zur Aufnahme der Werkstücke (24) aufweist,
c) wobei eine Hauptführungseinrichtung zur Führung des Förderwagens (18) vorgesehen ist,
- welche die Fahrschiene (14) als stationäres Hauptführungsmittel umfasst, und
- welche ein von dem Förderwagen (18) mitgeführtes Hauptführungsmittel (48, 50, 52, 54) umfasst, das mit dem stationären Hauptführungsmittel derart zusammenarbeitet, dass der Förderwagen (18) entlang der Fahrschiene (14) geführt ist,
d) wobei der Förderwagen (18) eine Verbindungseinrichtung (60) aufweist, die das mitgeführte Hauptführungsmittel mit dem Werkstückträger (58) verbindet,
wobei
e) eine Zusatzführungseinrichtung vorgesehen ist,
- die ein stationäres Zusatzführungsmittel (64, 66; 80, 82; 90, 92) umfasst, das nur in mindestens einem Stabilisierungsabschnitt (62) entlang der Förderstrecke (16) angeordnet ist, und
- die ein von dem Förderwagen (18) mitgeführtes Zusatzführungsmittel (68, 70; 78; 58) umfasst, das mit dem stationären Zusatzführungsmittel (64, 66; 80, 82; 90, 92) derart zusammenarbeitet, dass in dem Stabilisierungsabschnitt (62) eine Kippbewegung des Werkstückträgers (58) um eine in Förderrichtung weisende Rotationsachse (X) zumindest in einer Rotationsrichtung eingeschränkt ist, wobei
f) zwischen der Hauptführungseinrichtung und der Zusatzführungseinrichtung eine Entkoppelungseinrichtung (72, 74, 76), insbesondere hinsichtlich der Kippbewegung des Werkstückträgers (58) um die in Förderrichtung weisende Rotationsachse (X), angeordnet ist,
**dadurch gekennzeichnet, dass** die Entkoppelungseinrichtung (72, 74, 76) dadurch vorgesehen ist, dass die Verbindungseinrichtung (60) einen Zwischenträger (72) aufweist, der den Werkstückträger (58) derart trägt, dass der Werkstückträger (58) gegenüber dem Zwischenträger (72) in vertikaler Richtung eine begrenzte Bewegungsfreiheit hat.

2. Fördervorrichtung nach Anspruch 1, **dadurch gekennzeichnet, dass** die Hauptführungseinrichtung dazu eingerichtet ist, dass die Führungswirkung der Hauptführungseinrichtung im Stabilisierungsabschnitt (62) zumindest teilweise aufgehoben ist.

3. Fördervorrichtung nach Anspruch 2, **dadurch gekennzeichnet, dass** die Hauptführungseinrichtung zwei mitgeführte Hauptführungsmittel (48, 50, 52, 54) umfasst, die in einem Normalabschnitt (20, 22) der Förderstrecke (16) jeweils mit einer Anlagefläche (40, 42, 44, 46) der Fahrschiene (14) zusammenarbeiten, um hinsichtlich der Kippbewegung des Werkstückträgers (58) um die in Förderrichtung weisende Rotationsachse (X) eine Führung zu bewirken, und dass zur Aufhebung der Führungswirkung in dem Stabilisierungsabschnitt (62) eine der beiden Anlageflächen (40, 42) derart entfernt ist, dass sie nicht mehr an dem mitgeführten Hauptführungsmittel (48, 50) anliegt.

4. Fördervorrichtung nach einem der vorhergehenden Ansprüche, **dadurch gekennzeichnet, dass** die Zusatzführungseinrichtung dazu eingerichtet ist, seitlich, insbesondere an der Verbindungseinrichtung (60), am Förderwagen (18) anzugreifen, um eine seitliche Führung zu bewirken, indem eine horizontale Kraftkomponente eines Kippmoments, insbesondere der Verbindungseinrichtung (60), aufgenommen wird.

5. Fördervorrichtung nach einem der vorhergehenden Ansprüche, **dadurch gekennzeichnet, dass** das mitgeführte Zusatzführungsmittel (68, 70) ein an der Verbindungseinrichtung (60) angeordnetes Abroll- oder Gleitelement, insbesondere eine Führungsrolle oder eine Gleitkufe, aufweist und dass das stationäre Zusatzführungsmittel eine längliche Seitenführungsschiene (64, 66) aufweist, an welcher das Abroll- oder Gleitelement im Stabilisierungsabschnitt (62) anliegt.

6. Fördervorrichtung nach einem der vorhergehenden Ansprüche, **dadurch gekennzeichnet, dass** die Zusatzführungseinrichtung dazu eingerichtet ist, horizontal, insbesondere an dem Werkstückträger (58), am Förderwagen (18) anzugreifen, um eine horizontale Führung zu bewirken, indem eine vertikale Kraftkomponente eines Kippmoments, insbesondere des Werkstückträgers (58), aufgenommen wird.

7. Fördervorrichtung nach Anspruch 6, **dadurch gekennzeichnet, dass** das mitgeführte Zusatzführungsmittel (68, 70; 78; 58) ein an dem Werkstückträger (58) angeordnetes Abroll- oder Gleitelement, insbesondere eine Führungsrolle oder eine Gleitkufe, aufweist und dass das stationäre Zusatzführungsmittel (80, 82; 90, 92) eine längliche Auflageschiene, insbesondere zwei Auflageschienen, aufweist, auf welcher das Abroll- oder Gleitelement im Stabilisierungsabschnitt (62) aufliegt.

8. Fördervorrichtung nach einem der vorhergehenden Ansprüche, **dadurch gekennzeichnet, dass** der Antrieb (84, 86) in dem Stabilisierungsabschnitt (62) der Förderstrecke (16), in welchem das stationäre Zusatzführungsmittel (64, 66; 80, 82; 90, 92) angeordnet ist, formschlüssig arbeitet.

9. Oberflächenbehandlungsanlage (10) mit
a) einer Fördervorrichtung (12) nach einem der vorhergehenden Ansprüche,
b) einem Behandlungsraum (26), in dem der Stabilisierungsabschnitt (62) angeordnet ist, und
c) einem Fahrraum (30), der durch einen Tunnelboden (28) abgegrenzt unterhalb des Behandlungsraumes (26) angeordnet ist,
d) wobei der Tunnelboden (28) einen Verbindungsdurchgang (32) zwischen dem Behandlungsraum (26) und dem Fahrraum (30) aufweist,
e) wobei der Werkstückträger (58) oberhalb des Tunnelbodens (28) und die Hauptführungseinrichtung unterhalb des Tunnelbodens (28) angeordnet ist und sich die Verbindungseinrichtung (60) durch den Verbindungsdurchgang (32) des Tunnelbodens (28) erstreckt, um den Werkstückträger (58) mit der Hauptführungseinrichtung des Förderwagens (18) zu verbinden.

10. Oberflächenbehandlungsanlage nach Anspruch 9, **dadurch gekennzeichnet, dass** eine Seitenführungsschiene (64, 66) als stationäres Zusatzführungsmittel unterhalb des Tunnelbodens (28) angeordnet ist.

11. Oberflächenbehandlungsanlage nach Anspruch 9 oder 10, **dadurch gekennzeichnet, dass** eine Auflageschiene (80, 82; 90, 92) als stationäres Zusatzführungsmittel oberhalb des Tunnelbodens (28) angeordnet ist.

12. Verfahren zur Oberflächenbehandlung (10) von Werkstücken (24), insbesondere von Fahrzeugkarosserien oder Teilen davon, mit folgenden Schritten:
a) Fördern der Werkstücke (24) in einer Oberflächenbehandlungsanlage (10) mit einer Fördervorrichtung (12) nach einem der Ansprüche 1 bis 8, die entlang der Förderstrecke (16) einen Stabilisierungsabschnitt (62) umfasst;
b) Behandeln der Werkstücke (24) in dem Stabilisierungsabschnitt (62).

## Claims

1. Conveying device (12) for conveying workpieces (24), in particular for conveying vehicle bodies or parts thereof, having
a) a single-track rail (14) which extends along a conveying path (16),
b) at least one conveyor carriage (18),
- which can be moved by a drive (56; 84, 86) alongside the single-track running rail (14) along a conveying direction, and
- which has a workpiece carrier (58) for receiving the workpieces (24),
c) wherein a main guiding device is provided for guiding the conveyor carriage (18),
- which comprises the running rail (14) as a stationary main guiding means, and
- which comprises a main guiding means (48, 50, 52, 54) carried along by the conveyor carriage (18), which cooperates with the stationary main guiding means in such a way that the conveyor carriage (18) is guided along the running rail (14),
d) said conveyor carriage (18) having a connecting means (60) connecting said carried along main guiding means to said workpiece carrier (58),
wherein
e) an auxiliary guiding device is provided
- which comprises a stationary auxiliary guiding means (64, 66; 80, 82; 90, 92) arranged only in at least one stabilising section (62) along the conveying path (16), and
- which comprises an auxiliary guiding means (68, 70; 78; 58) which is carried along by the conveyor carriage (18) and which cooperates with the stationary auxiliary guiding means (64, 66; 80, 82; 90, 92) in such a way that in the stabilising section (62) a tilting movement of the workpiece carrier (58) about an axis of rotation (X) pointing in the conveying direction is restricted at least in one direction of rotation,
wherein
f) a decoupling device (72, 74, 76), in particular with regard to the tilting movement of the workpiece carrier (58) about the axis of rotation (X) pointing in the conveying direction, is arranged between the main guiding device and the auxiliary guiding device,
**characterized in that**
the decoupling device is provided **in that** the connecting device (60) has an inte mediate carrier (72) which supports the workpiece carrier (58) in such a way that the workpiece carrier (58) has a limited freedom of movement in the vertical direction with respect to the intermediate carrier (72).

2. Conveyor device according to claim 1, **characterised in that** the main guiding device is configured such that the guiding effect of the main guiding device is at least partially cancelled in the stabilising section (62).

3. Conveying device according to claim 2, **characterized in that** the main guiding device comprises two carried along main guiding means (48, 50, 52, 54) which, in a normal section (20, 22) of the conveying path (16), each cooperate with a bearing surface (40, 42, 44, 46) of the running rail (14), in order to effect guidance with respect to the tilting movement of the workpiece carrier (58) about the axis of rotation (X) pointing in the conveying direction, and **in that**, in order to cancel the guiding effect in the stabilizing section (62), one of the two bearing surfaces (40, 42) is removed in such a way that it no longer bears against the carried along main guiding means (48, 50).

4. Conveyor device according to one of the preceding claims, **characterised in that** the auxiliary guiding device is configures to engage laterally, in particular at the connecting device (60), on the conveyor carriage (18) in order to effect lateral guidance by absorbing a horizontal force component of a tilting moment, in particular of the connecting device (60).

5. Conveyor device according to one of the preceding claims, **characterised in that** the carried along auxiliary guiding means (68, 70) comprises a rolling or sliding element, in particular a guide roller or a skid, arranged on the connecting device (60), and **in that** the stationary auxiliary guiding means comprises an elongated lateral guide rail (64, 66) against which the rolling or sliding element rests in the stabilising section (62).

6. Conveyor device according to one of the preceding claims, **characterized in that** the auxiliary guiding means is arranged to engage horizontally, in particular on the workpiece carrier (58), on the conveyor carriage (18) in order to effect horizontal guidance by absorbing a vertical force component of a tilting moment, in particular of the workpiece carrier (58).

7. Conveyor device according to claim 6, **characterised in that** the carried along auxiliary guiding means (68, 70; 78; 58) has a rolling or sliding element, in particular a guide roller or a skid, arranged on the workpiece carrier (58), and **in that** the stationary auxiliary guide means (80, 82; 90, 92) has an elongate support rail, in particular two support rails, on which the rolling or sliding element is supported in the stabilising section or sliding element rests on in the stabilising section (62).

8. Conveyor device according to one of the preceding claims, **characterized in that** the drive (84, 86) operates in a form-fit manner in the stabilizing section (62) of the conveyor section (16) in which the stationary auxiliary guiding means (64, 66; 80, 82; 90, 92) is arranged.

9. Surface treatment installation (10) with
a) a conveyor device (12) according to one of the preceding claims,
b) a treatment chamber (26) in which the stabilising section (62) is arranged, and
c) a driving space (30) which is - delimited by a tunnel floor (28) - arranged below the treatment space (26),
d) wherein the tunnel floor (28) comprises a connecting passage (32) between the treatment chamber (26) and the travel chamber (30),
e) wherein the workpiece carrier (58) is arranged above the tunnel floor (28) and the main guiding device is arranged below the tunnel floor (28) and the connecting device (60) extends through the connecting passage (32) of the tunnel floor (28) to connect the workpiece carrier (58) to the main guiding device of the conveyor carriage (18).

10. Surface treatment installation according to claim 9, **characterized in that** a lateral guide rail (64, 66) is arranged as stationary auxiliary guide means below the tunnel floor (28).

11. Surface treatment installation according to claim 9 or 10, **characterised in that** a support rail (80, 82; 90, 92) is arranged as stationary auxiliary guide means above the tunnel floor (28).

12. Method for the surface treatment (10) of workpieces (24), in particular vehicle bodies or parts thereof, having the following steps:
a) conveying the workpieces (24) in a surface treatment installation (10) with a conveyor device (12) according to one of the claims 1 to 8, which comprises a stabilising section (62) along the conveying path (16);
b) treating the workpieces (24) in the stabilising section (62).

## Revendications

1. Dispositif de convoyage (12) conçu pour convoyer des pièces d'usinage (24), notamment pour convoyer des carrosseries de véhicules ou des parties de ces dernières, comprenant
a) un rail de déplacement (14) à piste unique, s'étendant le long d'un trajet de convoyage (16),
b) au moins un chariot convoyeur (18)
- mobile le long dudit rail de déplacement (14) à piste unique, à l'aide d'un entraînement (56 ; 84, 86), suivant une direction de convoyage, et
- doté d'un porte-pièces (58) destiné à recevoir lesdites pièces d'usinage (24),
c) sachant qu'un appareil de guidage principal, prévu pour guider ledit chariot convoyeur (18),
- inclut ledit rail de déplacement (14) en tant que moyen fixe de guidage principal et
- inclut un moyen de guidage principal (48, 50, 52, 54) entraîné conjointement au chariot convoyeur (18) et coopérant, avec ledit moyen fixe de guidage principal, de manière à guider ledit chariot convoyeur (18) le long du rail de déplacement (14),
d) lequel chariot convoyeur (18) est muni d'un appareil de rattachement (60) qui relie, au porte-pièces (58), ledit moyen de guidage principal entraîné conjointement, sachant
e) qu'il est prévu un appareil de guidage additionnel
- incluant un moyen fixe de guidage additionnel (64, 66 ; 80, 82 ; 90, 92) implanté uniquement dans au moins une zone de stabilisation (62), le long du trajet de convoyage (16), et
- incluant un moyen de guidage additionnel (68, 70 ; 78; 58), entraîné conjointement au chariot convoyeur (18) et coopérant avec ledit moyen fixe de guidage additionnel (64, 66 ; 80, 82 ; 90, 92) de façon telle que, dans ladite zone de stabilisation (62), un mouvement de basculement du porte-pièces (58), autour d'un axe de rotation (X) pointant dans la direction du convoyage, soit restreint au moins dans un sens de rotation, sachant
f) qu'un appareil de découplage (72, 74, 76), ciblant notamment ledit mouvement de basculement du porte-pièces (58) autour de l'axe de rotation (X) pointant dans la direction du convoyage, est interposé entre ledit appareil de guidage principal et ledit appareil de guidage additionnel,
**caractérisé par le fait que** l'appareil de découplage (72, 74, 76) est prévu en ce sens que l'appareil de rattachement (60) est pourvu d'un étai intercalaire (72) supportant le porte-pièces (58) de telle manière que ledit porte-pièces (58) soit doué d'une liberté de mouvement limitée, dans le sens vertical, par rapport audit étai intercalaire (72).

2. Dispositif de convoyage selon la revendication 1, **caractérisé par le fait que** l'appareil de guidage principal est agencé de façon telle que l'effet de guidage dudit appareil de guidage principal soit supprimé, au moins en partie, dans la zone de stabilisation (62).

3. Dispositif de convoyage selon la revendication 2, **caractérisé par le fait que** l'appareil de guidage principal inclut deux moyens de guidage principal (48, 50, 52, 54) entraînés qui, sur un tronçon normal (20, 22) du trajet de convoyage (16), coopèrent à chaque fois avec une surface de contact (40, 42, 44, 46) du rail de déplacement (14), en vue de provoquer un guidage relativement au mouvement de basculement du porte-pièces (58) autour de l'axe de rotation (X) pointant dans la direction du convoyage ; et **par le fait que**, pour supprimer l'effet de guidage dans la zone de stabilisation (62), l'une (40, 42) des deux surfaces de contact présente un éloignement tel qu'elle ne porte plus contre le moyen de guidage principal (48, 50) entraîné conjointement.

4. Dispositif de convoyage selon l'une des revendications précédentes, **caractérisé par le fait que** l'appareil de guidage additionnel est agencé de manière à venir latéralement en prise avec le chariot convoyeur (18), au niveau de l'appareil de rattachement (60) en particulier, afin de provoquer un guidage latéral par absorption d'une composante de force horizontale d'un couple de basculement, notamment dudit appareil de rattachement (60).

5. Dispositif de convoyage selon l'une des revendications précédentes, **caractérisé par le fait que** le moyen de guidage additionnel (68, 70), entraîné conjointement, comporte un élément de roulement ou de glissement, en particulier un galet de guidage ou un patin de glissement implanté sur l'appareil de rattachement (60) ; et **par le fait que** le moyen fixe de guidage additionnel est pourvu d'une glissière longiligne (64, 66) de guidage latéral, contre laquelle ledit élément de roulement ou de glissement est en applique dans la zone de stabilisation (62).

6. Dispositif de convoyage selon l'une des revendications précédentes, **caractérisé par le fait que** l'appareil de guidage additionnel est agencé de manière à venir horizontalement en prise avec le chariot convoyeur (18), au niveau du porte-pièces (58) en particulier, afin de provoquer un guidage horizontal par absorption d'une composante de force verticale d'un couple de basculement, notamment dudit porte-pièces (58).

7. Dispositif de convoyage selon la revendication 6, **caractérisé par le fait que** le moyen de guidage additionnel (68, 70 ; 78 ; 58), entraîné conjointement, comporte un élément de roulement ou de glissement, en particulier un galet de guidage ou un patin de glissement implanté sur le porte-pièces (58); et **par le fait que** le moyen fixe de guidage additionnel (80, 82 ; 90, 92) est doté d'une glissière longiligne d'appui, en particulier de deux glissières d'appui sur laquelle (lesquelles) ledit élément de roulement ou de glissement repose dans la zone de stabilisation (62).

8. Dispositif de convoyage selon l'une des revendications précédentes, **caractérisé par le fait que** l'entraînement (84, 86) fonctionne par complémentarité de formes dans la zone de stabilisation (62) du trajet de convoyage (16) dans laquelle le moyen fixe de guidage additionnel (64, 66 ; 80, 82 ; 90, 92) est implanté.

9. Installation (10) de traitement de surfaces, comprenant
a) un dispositif de convoyage (12) conforme à l'une des revendications précédentes,
b) un espace de traitement (26) dans lequel se trouve la zone de stabilisation (62), et
c) un espace de déplacement (30), délimité par le sol (28) d'un tunnel et situé au-dessous dudit espace de traitement (26),
d) le sol (28) du tunnel étant muni d'un passage de jonction (32), entre ledit espace de traitement (26) et ledit espace de déplacement (30),
e) sachant que le porte-pièces (58) et l'appareil de guidage principal sont disposés, respectivement, au-dessus du sol (28) du tunnel et au-dessous du sol (28) dudit tunnel, et que l'appareil de rattachement (60) traverse le passage de jonction (32) dudit sol (28) du tunnel, afin de relier ledit porte-pièces (58) audit appareil de guidage principal du chariot convoyeur (18).

10. Installation de traitement de surfaces, selon la revendication 9, **caractérisée par le fait qu'**une glissière (64, 66) de guidage latéral est implantée au-dessous du sol (28) du tunnel, en tant que moyen fixe de guidage additionnel.

11. Installation de traitement de surfaces, selon la revendication 9 ou 10, **caractérisée par le fait qu'**une glissière d'appui (80, 82 ; 90, 92) est implantée au-dessus du sol (28) du tunnel, en tant que moyen fixe de guidage additionnel.

12. Procédé de traitement de surfaces de pièces d'usinage (24), notamment de carrosseries de véhicules ou de parties de ces dernières, incluant les étapes suivantes :
a) convoyage des pièces (24) dans une installation (10) de traitement de surfaces, à l'aide d'un dispositif de convoyage (12) conforme à l'une des revendications 1 à 8 et muni d'une zone de stabilisation (62) le long du trajet de convoyage (16) ;
b) traitement desdites pièces (24) dans ladite zone de stabilisation (62).
